(19) Europäisches Patentamt
European Patent Office
Office européen des brevets

(11) **EP 0 905 487 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
***G01F 1/66*** *(2006.01)*

(21) Anmeldenummer: **98114236.7**

(22) Anmeldetag: **28.07.1998**

(54) **Durchflussmesser**

Flowmeter

Débitmètre

(84) Benannte Vertragsstaaten:
**AT CH DE DK ES FI FR GB IT LI NL SE**

(30) Priorität: **30.09.1997 DE 19743340**

(43) Veröffentlichungstag der Anmeldung:
**31.03.1999 Patentblatt 1999/13**

(73) Patentinhaber:
• **SIEMENS AKTIENGESELLSCHAFT**
**80333 München (DE)**
Benannte Vertragsstaaten:
**AT CH DE ES FI FR GB IT LI NL SE**
• **Landis+Gyr GmbH**
**90459 Nürnberg (DE)**
Benannte Vertragsstaaten:
**DK**

(72) Erfinder: **Vontz, Thomas, Dr.**
**81539 München (DE)**

(56) Entgegenhaltungen:
**EP-A- 0 392 294      EP-A- 0 650 034**
**EP-A- 0 650 035      WO-A-97/11337**
**DE-C- 4 336 370**

EP 0 905 487 B1

**Beschreibung**

Die Erfindung betrifft einen Durchflußmesser in Form eines von dem zu messenden Medium durchflossenen Meßrohres, wobei das Durchflußmedium mit Ultraschall beschallt wird und das ausgesandte Ultraschallsignal auf verschiedenen Wegen detektiert wird.

Das Prinzip der Wellenausbreitung von Ultraschall im bewegten Medium wird dazu benutzt, die Strömungsgeschwindigkeit v eines Mediums und damit das durch ein Rohr geflossene Volumen V zu messen. Es werden insbesondere Wellenpakete stromaufwärts und stromabwärts gesendet und empfangen und die jeweiligen Laufzeiten $t\uparrow$ und $t\downarrow$ bestimmt. Die Geschwindigkeit v ist zur Differenz der reziproken Laufzeiten $(1/t\uparrow - 1/t\downarrow)$ proportional.

Bei der Durchflußmessung von Flüssigkeiten mittels Ultraschall sind im allgemeinen zwei Verfahrensweisen möglich, um vom Ultraschallsender zum Empfänger ausgesandte Wellenpakete zu senden. Die meisten auf dem Markt befindlichen Geräte benutzen das Zwei- oder Mehrstrahlprinzip, bei dem sich die Wandler direkt gegenüberstehen und die Wellenpakete direkt, d.h. ohne Reflexion an Rohrwänden, durch das Medium gesendet werden. Gewisse Nachteile dieser Systeme können durch die Benutzung von Reflexionen an den Rohrwänden und an speziellen Leitreflektoren überwunden werden, die z.B. aus Messing bestehen können (s. Literaturstelle [1]).

Die Phase und Amplitude einer reflektierten Welle hängt von den Materialeigenschaften des schallführenden Mediums, des als Reflektor benutzten Mediums und von dem Winkel $\alpha$ zwischen der Senkrechten auf dem Reflektor und dem einfallenden Schall ab. Bei bestimmten Kombinationen von Reflektormaterial und Meßmedium kann es zu einem Phasenverlauf kommen, der einen starken ungünstigen Einfluß auf die Meßgenauigkeit hat, da er die Laufzeitdifferenzen aus denen das durchflossenene Volumen errechnet wird, verfälscht.

Bisher sind Meßrohre für Ultraschalldurchflußmessungen bekannt, die einen relativ kleinen Betriebsbereich bezüglich verschiedener Schallgeschwindigkeiten in Meßmedien aufweisen.

Aufgabe der Erfindung ist es, einen Durchflußmesser mit minimierter Baulänge bzw. erhöhtem Meßbereich bezüglich der Schallgeschwindigkeit in den Meßmedien oder mit erhöhter Meßgenauigkeit bereitzustellen.

Die Lösung dieser Aufgabe geschieht durch die Merkmale des Anspruches 1.

Der Erfindung liegt die Erkenntnis zugrunde, daß die geforderten Spezifikationen einzeln oder in Summe erfüllbar sind, indem die Materialkonstanten des Reflektors auf besondere Art und Weise ausgelegt werden. Durch die Auswahl von geeignetem Reflektormaterial lassen sich Fluide bei gegebener Rohrgeometrie im erforderlichen Schallgeschwindigkeitsbereich mit hoher Genauigkeit messen. Dabei kann die Querschnittsform des Meßrohres quadratisch, rechteckförmig oder rund sein.

Das Grundprinzip der Erfindung zielt darauf ab, in dem Meßrohr durch entsprechende Konfiguration der Einzelelemente des Meßrohres für den gesamten Bereich der zu messenden Schallgeschwindigkeiten (verschiedene zu messende Medien) niemals einen Rayleighwinkel $\alpha_r$ bei den Reflexionswinkeln auftreten zu lassen. Dazu gibt es prinzipiell mehrere Möglichkeiten bzw. Anhaltspunkte:

-    Die Reflexionswinkel müssen so groß wie möglich gehalten werden (Reflexionswinkel ist der Winkel zur Flächennormalen auf einem Reflektor). Die Randbedingungen der maximalen Meßrohrlänge und der minimalen Laufzeiten zur zeitlichen Auflösung der Laufzeitdifferenzen in und gegen die Strömungsrichtung und die prinzipielle Geometrie (quadratisch, rund, rechteckförmig) lassen bezüglich der Reflexionswinkel lediglich einen geringen Spielraum.

-    Bei gegebenen Reflexionswinkeln kann lediglich das Reflektormaterial günstig gewählt werden, dabei werden Materialien ausgesucht, die günstige Materialeigenschaften bezüglich der Longitudinal- und Transversalwellen Geschwindigkeiten aufweisen. Je höher die aus diesen Geschwindigkeiten entsprechend der Gleichung (3) resultierende Raleighgeschwindigkeit ist, umso besser eignet sich das Material als Reflektor.

-    Bei der Nutzung unterschiedlicher Reflexionswinkel kann es angebracht sein, unterschiedliche Reflektormaterialien einzusetzen. Somit wird bei flacheren Einfallswinkeln ein gängiges Material, wie beispielsweise Stahl benutzt und bei steileren Einfallswinkeln, d.h. bei Einfallswinkeln bei denen die Gefahr von Oberflächenwellenabspaltungen besteht, ein Material das kleine Rayleighwinkel $\alpha$, bzw. eine hohe Rayleighgeschwindigkeit aufweist.

-    Die Entscheidung, welches Material gewählt wird, kann anhand der Gleichung (5) getroffen werden, wenn die entsprechenden Winkel eingesetzt werden und $v_{L,1}$ im interessierenden Bereich durchvariiert wird. Die Phase der Reflexion darf sich dabei nur mit kleiner Steigung im interessanten Schallgeschwindigkeitsbereich ändern.

Gemäß der Erfindung wird Keramik als Reflektormaterial eingesetzt. Hier sind insbesondere die Materialien Aluminiumoxid, Wolframkarbid, Siliziumkarbid oder Borkarbid zu nennen. Aluminiumoxid zeigt eine gute Beständigkeit gegenüber sämtlichen Säuren und Laugen, ist kostengünstig und relativ einfach zu bearbeiten.

Je nach Meßrohrgeometrie kann in Ausführungsbeispielen der Erfindung die Keramikschicht durch ein mehr oder weniger massives Keramikeinbauteil oder durch Aufbringung von Schichten verschiedener Stärke auf die Metallwand des Meßrohres oder auf gesonderte zum Meßrohr angewinkelte Reflektorflächen dargestellt werden.

Um die Vorteile der Erfindung voll zur Geltung zu bringen, werden die Merkmale der Erfindung kombiniert mit einem Ultraschalldurchflußmesser, der einen helixförmigen Verlauf der Schallsignale innerhalb des Mediums bzw. innerhalb des Meßrohres und zwei Ultraschall- Sende/Empfangseinheiten aufweist. Dabei wird stromaufwärts und stromabwärtsbeschallt. Um die Möglichkeiten sämtlicher Meßrohrgeometrien optimal auszunützen, können Reflektoren aus unterschiedlichen Materialien bestehen, sofern die in Anspruch 1 definierten Bedingungen erfüllt sind.

Im folgenden werden anhand von schematischen Figuren Ausführungsbeispiele beschrieben.

Figur 1 zeigt einen konventionellen Ultraschalldurchflußmesser mit seitenwand-paralleler Durchschallung des Strömungskanales,

Figur 2 zeigt die Strahlversetzung durch Oberflächenwelleneffekte anhand einer Schlierenaufnahme eines Ultraschallstrahles der an einer Flüssig/Fest-Grenzfläche reflektiert wird,

Figur 3A zeigt den Verlauf einer reflektierten Amplitude relativ zum Einfallswinkel $\alpha$ mit dem Übergang Stahl/Wasser bei 1500 ms,

Figur 3B zeigt den Phasenverlauf zu der Darstellung in Figur 3A,

Figur 4A und 4B zeigen für den Fall eines festen Einfallswinkels am Reflektor von 36° (Stahl/Fluid) den Verlauf der Reflektivität bzw. den entsprechenden Verlauf der Phase,

Figuren 5A und 5B zeigen den Verlauf der reflektierten Amplitude über den Einfallswinkel $\alpha$ für den Übergang Aluminiumoxid/Wasser bei 1500 ms bzw. den entsprechenden Phasenverlauf,

Figur 6 zeigt den Phasenverlauf für einen festen Einfallswinkel von 36° (Aluminiumoxid/Fluid),

Figur 7 zeigt den Vergleich der Ergebnisse bei einem Meßrohr mit Stahl bzw. mit Aluminiumoxidreflektoren,

die Figuren 8, 9, 10 und 11 zeigen verschiedene Ausführungsformen der Reflektoren innerhalb eines Meßrohres.

Das Grundprinzip der Erfindung wird am Beispiel der helixförmigen Schallführung innerhalb eines Meßrohres veranschaulicht. Unabhängig davon können für jede andere Geometrie, beispielsweise Reflektoren in rechteckförmigen oder runden Meßrohren, anhand der hier dargestellten Gleichungen entsprechende Berechnungen dargeführt werden. Die helixförmige Schallführung erfordert es, daß die Schallwelle im beispielsweise quadratischen Meßrohr mehrfach reflektiert wird. Teilweise werden die Wände zur Reflektion benutzt, es müssen jedoch geeignete geformte Reflektoren eingesetzt werden, um den Schall auf seine Bahn zu bringen.

Die Phase und die Amplitude einer reflektierten Welle hängt von den Materialeigenschaften des schallführenden Mediums, des als Reflektor benutzten Materials und von dem Winkel $\alpha$ zwischen der senkrechten auf den Reflektor und dem einfallenden Schallsignal ab. Die Physik für ebene Wellen und unendlich ausgewählte Grenzflächen wird in der Literatur beschrieben. Für den hier behandelten Fall gilt "einfallende Welle im flüssigen Medium auf eine feste Grenzfläche". Hierbei existieren verschiedene Grenzwinkel, bei denen Wellenmoden-Umwandlungen stattfinden. Man unterscheidet zwischen dem Grenzwinkel für die Longitudinalwelle (LW):

$$\alpha_{L,G} = ArcSin\left[\frac{v_{L,I}}{v_{L,II}}\right] \qquad (1)$$

und dem für die Transversalwelle (TW):

$$\alpha_{T,G} = ArcSin\left[\frac{v_{L,I}}{v_{T,II}}\right] \qquad (2)$$

Hierbei steht I für die Flüssigkeit, II für den reflektierenden Festkörper, $v_L$ bzw. $v_T$ ist die Geschwindigkeit der Longitudinal- bzw. Transversalwelle im jeweiligen Material. Der Grenzwinkel für die Longitudinalwelle liegt im allgemeinen bei kleineren Winkeln, als der Grenzwinkel für die Transversalwelle. Ist der Einschallwinkel größer als $\alpha_{T,G}$, so herrscht totale Reflexion. $\alpha_{T,G}$, ist dann der sog. Grenzwinkel für Totalreflexion und der Reflexionskoeffizient wird zu 1.

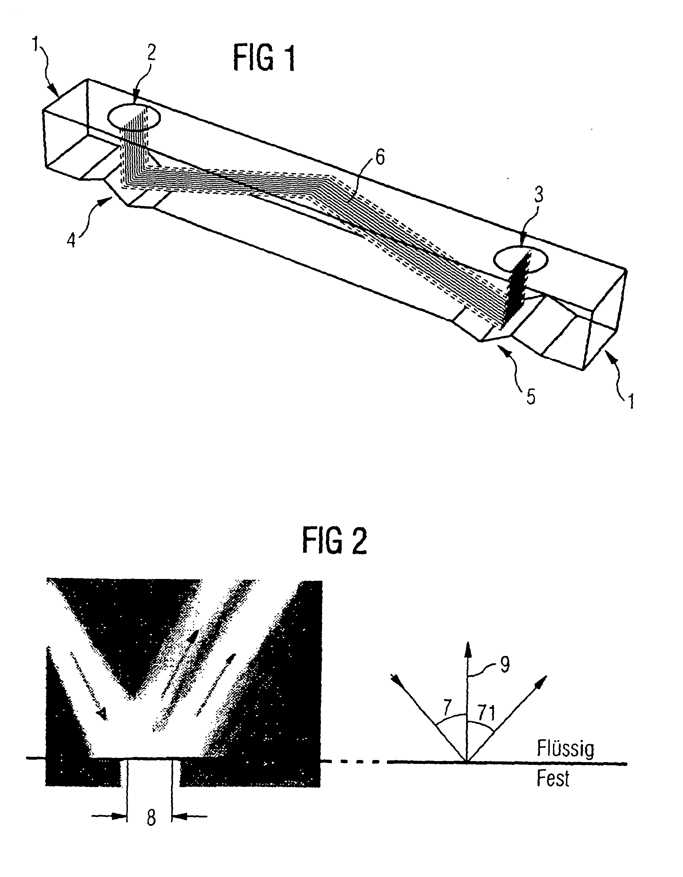

Bei Einfallswinkeln im Bereich des Grenzwinkels der Totalreflexion für die Transversalwelle spaltet die eingestrahlte Longitudinalwelle im Festkörper derart in eine Longitudinalwelle und eine Transversalwelle auf, daß diese zusammen mit der einfallenden Welle eine Oberflächenwelle, eine Rayleighwelle (RW), bilden können. Die stärkste Oberflächenwelle entsteht bei einem Einfallswinkel etwas über den Grenzwinkel (Literaturstelle [3], Seite 39). Bedingung für die Anregung ist, daß die sog. Spurwellenlänge der einfallenden Welle gleich der Wellenlänge der rayleighschen Oberflächenwelle ist. Die Geschwindigkeit der Oberflächenwelle hängt von den Longitudinal- und den Transversalwellen-Geschwindigkeiten im Reflektormaterial ab. Wegen der Reziprozität strahlt auch die entstehende Oberflächenwelle wieder eine Transversalwelle und eine Longitudinalwelle ab, die aber durch die Propagation der Rayleighwelle und der endlichen Breite der einfallenden Welle an einer anderen Stelle des Reflektors um einige Wellenlängen versetzt, wieder abgestrahlt wird. Diese Strahlversetzung 8 nimmt der an der vorgesehenen Stelle reflektierten Longitudinalwelle Energie weg und führt deshalb zu einem Pegelverlust. Der genannte Effekt ist in der Optik als Goos-Hähnchen-Effekt bekannt und ist in Figur 2 dargestellt.

In Figur 1 wird eine Variante eines Meßrohres 1 dargestellt, daß Sende-Empfangs-Einheiten 2, 3 aufweist, wobei entweder in einer Richtung geschallt wird oder durch den Einsatz von kombinierten Sende-Empfangswandlern abwechselnd in Gegenrichtung von links nach rechts bzw. rechts nach links durch das hindurchfließende Medium geschallt wird. Der Verlauf des Ultraschallsignales 6 ist durch eine Linienschar angedeutet. Die Reflektoren 4, 5 dienen dazu, die von den Sende/Empfangseinheiten 2, 3 ausgesandten bzw. Empfangenen Ultraschallsignale in eine grobe Richtung zu führen.Dazwischen, etwa in der Mitte der dargestellten Figur wird das Ultraschallsignal 6 an einer Rohrwandung, in diesem Fall an der oberen Wand, reflektiert.

Figur 2 zeigt eine Schlierenaufnahme eines Ultraschallstrahles, der an einer Grenzfläche fest/flüssig reflektiert wird (Literaturstelle [2] Seite 150). Die Strahlversetzung 8 ergibt sich durch die Abspaltung einer Oberflächenwelle. In Figur 2 ist dabei der Festkörper unterhalb einer eingezeichneten Grenzlinie und das Fluid oberhalb dieser Linie angesiedelt. Ein einfallender Strahl bildet mit einer Flächennormalen 9 einen Einfallswinkel 7, wobei der reflektierte Strahl mit der Flächennormalen 9 einen Reflexionswinkel 71 bildet.

Der Rayleighwinkel ist abhängig von den Schallgeschwindigkeiten der Longitudinalwellen und der Transversalwellen in der Wand bzw. Im Reflektormaterial, aber auch von der FluidSchallgeschwindigkeit.

Aus der Rayleigh-Geschwindigkeit $v_R$ läßt sich der Rayleighwinkel $\alpha_R$ berechnen, unter dem der genannte Effekt auftritt. Eine Näherung für $v_R$ ist aus der Literaturstelle [2] bekannt:

$$v_R = \frac{0,995 v_{T,II}(v^2 T,II - 0,718 v^2 L,II)}{v^2 T,II - 0,75 v^2 L,II} \qquad (3)$$

und der Einschallwinkel, unter dem die Oberflächenwelle angeregt wird, ist

$$\alpha_R = ArcSin\left[\frac{v_{L,I}}{v_R}\right] \qquad (4)$$

Der in Figur 2 sichtbare Effekt der Strahlversetzung zieht eine Abnahme der empfangenen Amplitude bei Durchgang durch den Rayleighwinkel nach sich. In der Praxis erfolgt dieser Durchgang durch die Änderung der Schallgeschwindigkeit bei gegebenem festem Reflexionswinkel. In der folgenden Gleichung (5) sind die formellmäßigen Beziehungen für den reflektierten Schalldruck an der Grenzfläche flüssig/fest dargestellt (Literaturstelle [3], Seite 612).

$$R = \frac{\left(\frac{v_{T,II}}{v_{L,II}}\right)^2 Sin[2\alpha_L]Sin[2\alpha_T] + Cos^2[2\alpha_T] - \frac{\rho_I v_{L,I} Cos[\alpha_L]}{\rho_{II} v_{L,II} Cos[\alpha]}}{\left(\frac{v_{T,II}}{v_{L,II}}\right)^2 Sin[2\alpha_L]Sin[2\alpha_T] + Cos^2[2\alpha_T] + \frac{\rho_I v_{L,I} Cos[\alpha_L]}{\rho_{II} v_{L,II} Cos[\alpha]}} \qquad (5)$$

Je nach den Wellengeschwindigkeiten und Einfallswinkeln ist R eine komplexe Größe, aus der sich der Betrag, d.h. der eigentliche Reflexionskoeffizient, und die Phase ergeben.

$\rho_1$ ist die Dichte des Fluids, $\rho_2$ ist die Dichte des Festkörpers. $\alpha_T$ und $\alpha_L$ sind die Winkel der Transversal- bzw. Longitudinalwelle im Festkörper (Reflektor) und sind wiederum Funktionen des Einfallswinkels $\alpha$ ( Bezugszeichen 7) und der Schallgeschwindigkeit im Medium $v_{L,i}$:

$$\alpha_L = ArcSin\left[ Sin[\alpha]\frac{v_{L,II}}{v_{L,I}} \right] \qquad (6)$$

$$\alpha_T = ArcSin\left[ Sin[\alpha]\frac{v_{T,II}}{v_{L,I}} \right] \qquad (7)$$

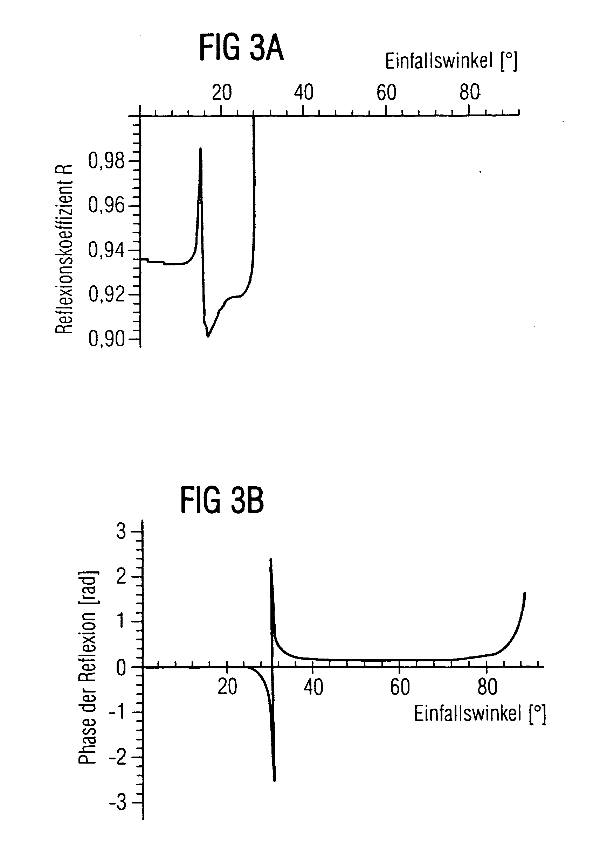

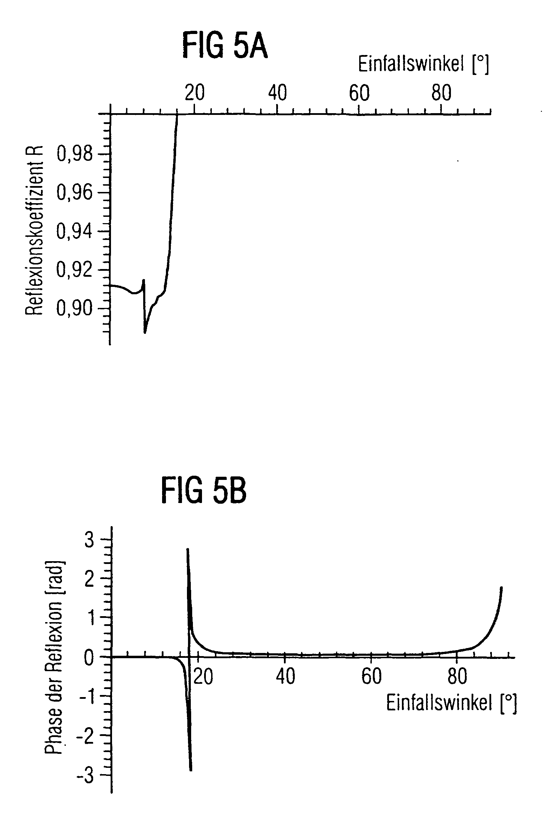

Die effektive Schallgeschwindigkeit für eine Ultraschallmessung stellt sich im einfachsten Fall stromabwärts als Summe von Schallgeschwindigkeit c plus Geschwindigkeit des Mediums v bzw. stromaufwärts als c minus v dar. Als maximale Strömungsgeschwindigkeit für die technische Durchflußmessung in einem Meßrohr wird v = 10 m/sec angesehen. Aus den sich aus diesem Sachverhalt ergebenden unterschiedlichen Laufzeiten wird wie in der Einleitung erörtert auf die Strömungsgeschwindigkeit zurückgerechnet. Kommt es bei der Reflexion zu Wellenumwandlungen und Oberflächenwellen-Abspaltungen, so ändert sich die Phase des Signals und zwar in Abhängigkeit von seiner effektiven Schallgeschwindigkeit c + v bzw. c - v. Damit wird die bei der Bestimmung des Durchflußes vorausgesetzte durch die Strömung bedingte gesetzmäßige "Nicht-Reziprozität" gestört und es kommt zu einem nicht unerheblichen Meßfehler. Besonders kritisch ist der Bereich des Grenzwinkels der Totalreflexion, da es dort zu einem Phasensprung von -π nach +π kommt. Dort sind die nicht reziproken Phasenanteile am größten und der Meßfehler ist maximal. Phasengänge der Reflexion, die stetig und nur mit geringer Steigung gegen die Schallgeschwindigkeitsänderung verlaufen, haben einen vernachlässigbar kleinen Einfluß auf den Meßfehler (siehe Figuren 3B und 5B).

Im folgenden werden mehrere Kombinationen aus verschiedenen Materialien für Reflektoren und verschiedenen Meßmedien dargestellt:

Reflektormaterial - Stahl, Medium - Wasser:

$v_{L,II}$ = 5900m /s
$v_{T,II}$ = 3200m/s
$\rho_H$ = 7,7 kg/m³
$\rho_I$ = 1,0 kg/m³
$v_{L,I}$ = 1500 m/s (Bei ca. 25°C)

Aus den Gleichungen (1) bis (4) ergibt sich:

$v_R$ = 2960 m/s
$\alpha_L$ = 14,7°(Für $v_{L,I}$ = 1500 m/s)
$\alpha_T$ = 27,9°(Für $v_{L,I}$ = 1500 m/s)
$\rho_R$ = 30,4°(Für $v_{L,I}$ = 1500 m/s)

In der Figur 3A ist der Einfallswinkel über dem Reflexionskoeffizienten aufgetragen. Der Verlauf der reflektierten Amplitude (Reflexionskoeffizient R entsprechend Gleichung (5)) über dem Einfallswinkel $\alpha$ (gerechnet gegen das Lot auf der Reflexionsfläche) wird dargestellt für den Übergang/Stahl-Wasser (1500 m/s). In Figur 3A wird deutlich, dass die beiden Winkelwerte $\alpha_L$ und $\alpha_T$ anhand der hohen Reflektivität zu einer Totalreflexion oberhalb von 28° führt (Reflexionskoeffizient = 1).

Figur 3B zeigt den entsprechenden Phasenverlauf korrespondierend mit Figur 3A. Die Einheiten hierzu sind im Bogenmass angegeben. Es ist deutlich der Phasensprung bei 28° zu erkennen. Auch bei höheren Winkeln als dem der Totalreflexion ist ein gleichbleibender Phasenverlauf zu erkennen.

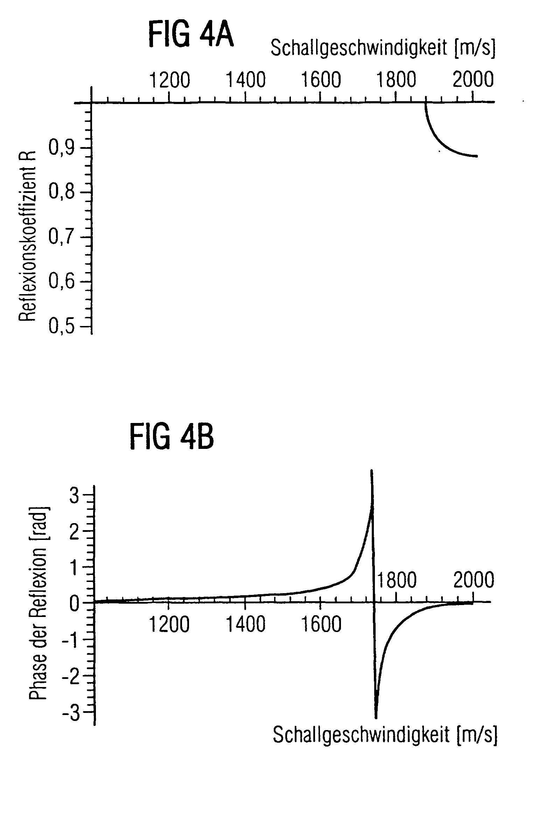

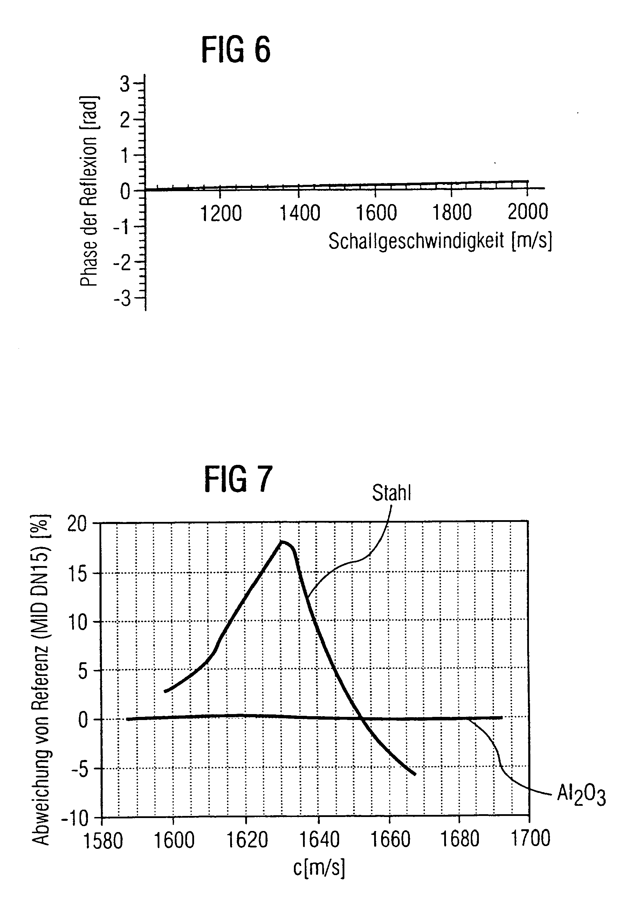

In den Figuren 4A und 4B ist über der Schallgeschwindigkeit einmal der Reflexionskoeffizient R und zum anderen die Phase der Reflexion aufgetragen. Für den Fall eines vorgegebenen Einfallswinkels am Reflektor von 36° (Stahl/ Fluid) ist der Verlauf der Reflektivität beispielhaft über der Fluidschallgeschwindigkeit aufgetragen. In Figur 4B ist die Abhängigkeit der entsprechenden Schallgeschwindigkeit von der Phase der Reflexion dargestellt, wobei diese Kurve eine Beurteilung der Messeigenschaften im angestrebten Schallgeschwindigkeitsbereich, hier von 1000 - 2000 m/s, ermöglicht. Während die Reflektivität noch einen moderaten Verlauf aufweist, zeigt die Phase eine deutlichere Abhängigkeit von der Fluischallgeschwindigkeit. Ein derart konfiguriertes Messrohr würde im Bereich 1600 - 1900 m/s einen auffälligen Messfehler zeigen, was auch in Figur 7 an der Kurve, die für Stahl als Reflektormaterial aufgenommen wurde, erkennbar ist.

Bei der Verwendung von Aluminiumoxidkeramik als Reflektor (Korund, $Al_2O_3$) werden günstige Verhältnisse erzielt. Der Rayleighwinkel liegt hier sehr viel niedriger als bei Stahl und ist weit vom Reflexionswinkel entfernt:

$$v_{L,II} = 9000 m/s$$
$$v_{T,II} = 5500 m/s$$
$$\rho_{II} = 3,6 kg/ m^3$$
$$\rho_I = 1,0 kg/m^3$$

$$v_{L,I} = 1500 m/s (Bei\ ca. 25°C)$$

Aus den Gleichungen 1 bis 4 ergibt sich:

$$v_R = 5007 m/s$$
$$\alpha_L = 9.6° (Für v_{L,I} = 1500 m/s)$$
$$\alpha_T = 15.8° (Für v_{L,I} = 1500 m/s)$$
$$\alpha_R = 17.4° (Für v_{L,I} = 1500 m/s$$

Figur 5A und Figur 5B zeigen den Verlauf der Amplitude und den Verlauf der Phase jeweils gegenüber dem Einfallswinkel aufgetragen. Die Werte entsprechen dem obengenannten Beispiel. Der Verlauf der Amplitude über dem Einfallswinkel $\alpha$ für den Übergang Aluminiumoxid/Wasser in Figur 5A zeigt das oberhalb von 16° Totalreflexion herrscht, sodaß der Reflexionskoeffizient gleich 1 ist. Beim Phasenverlauf sind wiederum die Einheiten im hohen Maß aufgetragen. Der Phasenspruch liegt bei 16°. Im Bereich von 25 bis 75° ist der Phasengang sehr gering. Für den Fall eines festen Einfallswinkels am Reflektor von beispielsweise 36° (Aluminiumoxid/Fluid) ist der Reflexionskoeffizient im ganzen Bereich gleich 1.

Figur 6 zeigt den Phasenverlauf für einen festen Einfallswinkel von 36° (Aluminiumoxid/Fluid). Diese Kurve ermöglicht eine Beurteilung der Meßeigenschaften im angestrebten Schallgeschwindigkeitsbereich, in diesem Fall von 1000 bis 2000 m/s. Die Phase zeigt nur eine geringe Abhängigkeit von der Fluidschallgeschwindigkeit. Ein solcher Maßen konfiguriertes Meßrohr würde im Bereich von 1000 bis 2000 m/s keinen auffälligen Meßfehler zeigen, was auch in Figur 7 für Aluminiumoxid dargestellt ist. In Figur 7 wird der Vergleich der Ergebnisse eines Meßrohres mit Reflektoren aus Stahl bzw. Mit Reflektoren aus Aluminiumoxid ($Al_2O_3$) dargestellt. Die Ergebnisse sind mit einem magnetisch induktiven Durchflußmesser (MID) aufgenommen worden. Figur 7 zeigt die wesentliche Auswirkung der Erfindung, indem über einen breiten Bereich von Schallgeschwindigkeiten verschiedenster Fluide gleichbleibende Durchflußmeßzahlen ermittelt werden.

Die Wirksamkeit des Vorgehens im erfinderischen Sinne kann somit dokumentiert werden. Für das Experiment wurde eine konstante Strömungsgeschwindigkeit jeweils eingestellt. Die Variation der Schallgeschwindigkeit c erfolgte durch Erwärmen des Mediums. Die Figuren 4B und 6 erklären die großen bzw. geringen Abweichungen gegen die Referenzmessung.

Von den bevorzugten Keramikmaterialien Wolframkarbit, Siliziumkarbit, Borkarbit und Aluminiumoxid ist aufgrund der technischen Handhabung der Verfügbarkeit Aluminiumoxid die vorteilhafteste Auswahl. Je nach Anwendungsgebiet muß zusätzlich auf die chemische Beständigkeit geachtet werden. Dabei ist Aluminiumoxid sehr gut beständig gegen fast alle Säuren und Laugen, kostengünstig und relativ einfach zu bearbeiten.

Strukturelle Ausgestaltungen von Reflektoren ergeben verschiedene Realisierungsmöglichkeiten:

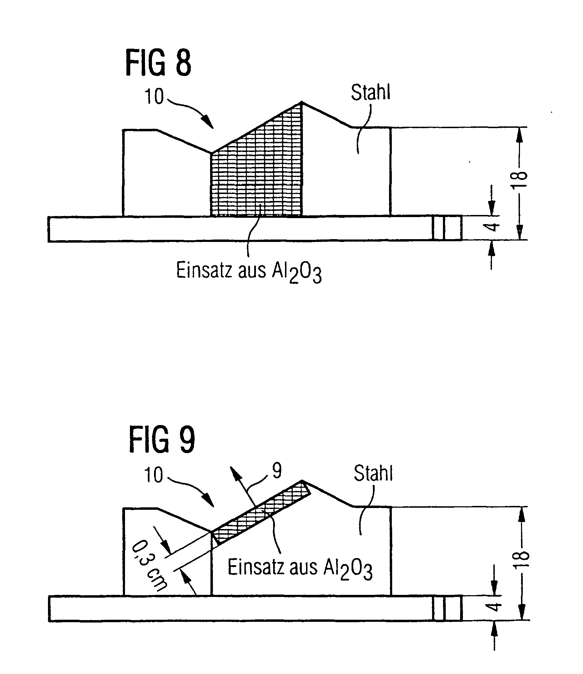

- ein Reflektor aus obigem Material kann als Vollmaterial in das Basismaterial, das beispielsweise Stahl ist, eingesetzt werden (Figur 8). Die Größe des Reflektors richtet sich nach den Übertragungseigenschaften des Wandlers. Ergebnisse wie in Bild 7 für Aluminiumoxid wurden mit einem zylinderförmigen Aluminiumoxidkörper als Reflektor mit einem Durchmesser von 15 mm erzielt. Die Frequenz der Wandler betrug dabei 2 Mhz.

- ein Reflektor aus obigem Material kann als eine Platte auf das Basismaterial aufgebracht werden (Figur 9). Ergebnisse wie in Figur 7 wurden mit einer Plattendicke von 0,3 cm erreicht. Dabei ist entsprechend der Figur 9 das Basismaterial wiederum Stahl und der Einsatz besteht aus Aluminiumoxid mit einer annähernd ebenen Reflektoroberfläche 10, auf der eine Flächennormale 9 dargestellt ist.

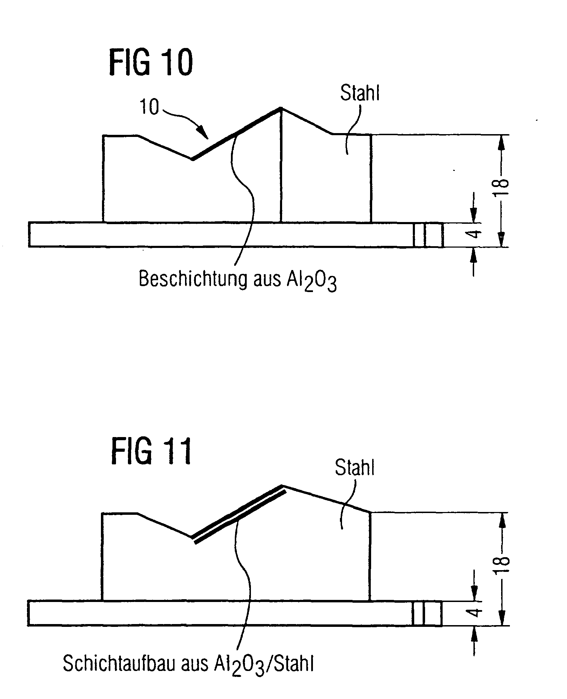

- Das Basismaterial kann mit geeignetem Reflektormaterial beschichtet werden (Figur 10). Ergebnisse wie in Figur 7 dargestellt wurden mit einer Beschichtungsdicke von 0,5 mm Aluminiumoxid erreicht. Das Basismaterial kann mit geeignetem Reflektormaterial abwechselnd mit anderem Basismaterial, z.B. Stahl beschichtet werden (Figur 11).

- Das gesamte Meßrohr kann als Gußteil im geeignetem Material hergestellt werden oder innen mit geeignetem Material beschichtet werden.

Dabei sind derartige Vorteile zu erzielen, daß die physikalischen Effekte und ihr Einfluß auf die Meßgenauigkeit qualitativ und teilweise quantitativ beschreibbar sind und man sich sicher sein kann, daß bei geeignetem Material die Meßfehler über den angestrebten Bereich klein sind. Bei den oben angeführten strukturellen Ausführungen von eingebauten Reflektoren sind die Zusammenhänge nicht in einfacher Form vorhersehbar, so daß Berechnungen und Eignungstest notwendig sind.

/1/ T.Vontz, "Linearisierung von Ultraschalldurchflußmessgeräten durch helixförmige Schallführung", Schutzrechtsanmeldung P4336370.9 vom 25.10.93.
/2/ Gordon S. Kino, "Acoustic Waves: Devices, Imaging, And Analog Signal Processing", Prentice Hall, New Jersey
/3/ Krautkrämer, "Werkstoffprüfung mit Ultraschall", Springer 1975.
/4/ Lawrence C. Lynnworth, "Ultrasonic Measuring System For Differing Flow Conditions" United States Patent 4,103,551
/5/ Lawrence C. Lynnworth, "Ultrasonic Measurements for Process Control", Academic Press, Inc., Boston
/6/ O.Fiedler, "Strömungs- und Durchflußmeßtechnik", Oldenburg Verlag, München

**Patentansprüche**

1. Durchflussmesser in Form eines von dem zu messenden Medium durchflossenen Messrohres (1) mit:

   - mindestens einer Ultraschall-Sende/Empfangs-Einheit (2,3), mit der das Medium beschallt wird, und
   - mindestens einem im Messrohr (1) angeordneten Reflektor (4,5) zur Reflexion eines von der Ultraschall-Sende/ Empfangs-Einheit (2,3) ausgesandten, unter vorgegebenem Einfallswinkel auf den Reflektor treffenden Ultraschallsignals (6) auf direktem Weg oder unter Reflexion an einer Messrohrwand in Richtung auf die gleiche oder auf andere Ultraschall-Sende/Empfangs-Einheiten (2,3), **dadurch gekennzeichnet, daß** der mindestens eine Reflektor (4,5) eine derart hohe Rayleighgeschwindigkeit als Materialeigenschaft aufweist, daß die Anregung von Oberflächenwellen bei der Reflexion unter dem vorgegebenen Einfallswinkel vermieden wird und daß der mindestens eine Reflektor (4, 5) zu diesem Zweck zumindest an seiner reflektierenden Oberfläche aus Keramik besteht.

2. Durchflussmesser nach Anspruch 1, worin die Keramik Aluminiumoxid ist.

3. Durchflussmesser nach Anspruch 1, worin die Keramik Wolframcarbid, Siliziumcarbid oder Borcarbid ist.

4. Durchflussmesser nach einem der Ansprüche 1 bis 3, worin der mindestens eine Reflektoren (4,5) aus einem metallischen Grundkörper mit einer darauf aufgebrachten Keramikschicht besteht.

5. Durchflussmesser nach einem der Ansprüche 1 bis 3, worin der mindestens eine Reflektor (4,5) durch eine auf die

**EP 0 905 487 B1**

Messrohrinnenwand aufgebrachte Keramikschicht dargestellt ist.

6. Durchflussmesser nach einem der vorhergehenden Ansprüche, worin zwei Ultraschall-Sende/Empfangs-Einheiten (2,3) vorhanden sind und das Ultraschallsignal (6) einen helixförmigen Verlauf aufweist.

7. Durchflussmesser nach einem der vorherigen Ansprüche, worin zwei Reflektoren (4,5) vorhanden sind.

8. Durchflussmesser nach einem der vorhergehenden Ansprüche, worin beim Einsatz von mindestens zwei Reflektoren (4,5) die Reflektoren (4,5) aus unterschiedlichen Materialien bestehen.

**Claims**

1. Flow meter in the form of a measurement tube (1) through which the medium that is to be measured flows, comprising:

   - at least one ultrasound transmitting/receiving unit (2, 3) by means of which the medium is exposed to ultrasonic waves and
   - at least one reflector (4, 5) disposed in the measurement tube (1) for the purpose of reflecting an ultrasonic signal (6) emitted by the ultrasound transmitting/receiving unit (2, 3) and striking the reflector at a predetermined angle of incidence either directly or by reflection off a measurement tube wall in the direction of the same or other ultrasound transmitting/receiving units (2, 3), **characterised in that** the at least one reflector (4, 5) has such a high Rayleigh velocity as a material characteristic that the excitation of surface waves during the reflection under the predetermined angle of incidence is avoided, and that for this purpose the at least one reflector (4, 5) consists of ceramic material at least on its reflecting surface.

2. Flow meter according to claim 1, wherein the ceramic material is aluminium oxide.

3. Flow meter according to claim 1, wherein the ceramic material is tungsten carbide, silicon carbide or boron carbide.

4. Flow meter according to one of claims 1 to 3, wherein the at least one reflector (4, 5) consists of a metallic base material to which a ceramic layer has been applied.

5. Flow meter according to one of claims 1 to 3, wherein the at least one reflector (4, 5) is represented by a ceramic layer applied to the interior wall of the measurement tube.

6. Flow meter according to one of the preceding claims, wherein two ultrasound transmitting/receiving units (2, 3) are present and the ultrasonic signal (6) has a helical shape.

7. Flow meter according to one of the preceding claims, wherein two reflectors (4, 5) are present.

8. Flow meter according to one of the preceding claims, wherein when at least two reflectors (4, 5) are used, said reflectors (4, 5) consist of different materials.

**Revendications**

1. Débitmètre sous la forme d'un tube de mesure (1) parcouru par le fluide à mesurer, comprenant :

   - au moins une unité émettrice-réceptrice d'ultrasons (2, 3) avec laquelle le milieu est irradié, et
   - au moins un réflecteur (4, 5) disposé dans le tube de mesure (1), pour réfléchir un signal ultrasonore (6) émis par l'unité émettrice-réceptrice d'ultrasons (2, 3) et rencontrant le réflecteur sous un angle d'incidence prédéfini, par voie directe ou par réflexion sur une paroi du tube de mesure, vers la même ou vers d'autres unités émettrices-réceptrices d'ultrasons (2, 3), **caractérisé en ce que** ledit au moins un réflecteur (4, 5) présente, comme propriété de matière, une vitesse de Rayleigh si élevée que l'excitation d'ondes de surface est évitée lors de la réflexion sous ledit angle d'incidence prédéfini, et **en ce que** ledit au moins un réflecteur (4, 5) est, à cet effet, en céramique, au moins au niveau de sa surface réfléchissante.

2. Débitmètre selon la revendication 1, dans lequel la céramique est de l'oxyde d'aluminium.

**3.** Débitmètre selon la revendication 1, dans lequel la céramique est du carbure de tungstène, du carbure de silicium ou du carbure de bore.

**4.** Débitmètre selon l'une des revendications 1 à 3, dans lequel ledit au moins un réflecteur (4, 5) comprend un corps de base métallique revêtu d'une couche céramique.

**5.** Débitmètre selon l'une des revendications 1 à 3, dans lequel ledit au moins un réflecteur (4, 5) est constitué par une couche céramique déposée sur la paroi interne du tube de mesure.

**6.** Débitmètre selon l'une des revendications précédentes, dans lequel deux unités émettrices-réceptrices d'ultrasons (2, 3) sont prévues et dans lequel le signal ultrasonore (6) présente une allure hélicoïdale.

**7.** Débitmètre selon l'une des revendications précédentes, dans lequel deux réflecteurs (4, 5) sont prévus.

**8.** Débitmètre selon l'une des revendications précédentes, dans lequel, lorsque au moins deux réflecteurs (4, 5) sont mis en oeuvre, lesdits réflecteurs (4, 5) sont en matières différentes.

# FIG 1

# FIG 2

Flüssig

Fest

# FIG 3A

Einfallswinkel [°]

# FIG 3B

# FIG 4A

Schallgeschwindigkeit [m/s]

1200   1400   1600   1800   2000

Reflexionskoeffizient R

0,9
0,8
0,7
0,6
0,5

# FIG 4B

Phase der Reflexion [rad]

3
2
1
0
-1
-2
-3

1200   1400   1600   1800   2000

Schallgeschwindigkeit [m/s]

# FIG 5A

Einfallswinkel [°]

# FIG 5B

## FIG 6

## FIG 7

## FIG 8

10

Stahl

18

4

Einsatz aus $Al_2O_3$

## FIG 9

10

9

Stahl

0,3 cm

Einsatz aus $Al_2O_3$

18

4

## FIG 10

Stahl

10

Beschichtung aus $Al_2O_3$

18

4

## FIG 11

Stahl

Schichtaufbau aus $Al_2O_3$/Stahl

18

4